# EUROPÄISCHE PATENTSCHRIFT

(11) **EP 2 621 659 B1**
(45) Veröffentlichungstag und Bekanntmachung des Hinweises auf die Patenterteilung: **17.05.2017**
(21) Anmeldenummer: 11767630.4
(22) Anmeldetag: 30.09.2011
(51) Int. Cl.: B23K 11/00, B23K 11/11, B23K 11/16, B23K 11/20, B21J 15/02, F16B 5/04, F16B 5/08

(54) **VERFAHREN ZUR HERSTELLUNG EINES HYBRIDBAUTEILS DURCH NIETEN UND SCHWEISSEN ; SCHWEISSNIETVERBINDUNG**
METHOD FOR PRODUCING A HYBRID COMPONENT BY RIVETING AND WELDING AND WELD RIVET JOINT
PROCÉDÉ POUR RÉALISER UN ÉLÉMENT STRUCTURAL HYBRIDE PAR RIVETAGE ET SOUDAGE ; ASSEMBLAGE PAR SOUDAGE-RIVETAGE

(30) Priorität: 30.09.2010 DE 102010047032
(43) Veröffentlichungstag der Anmeldung: 07.08.2013
(73) Patentinhaber: Benteler Automobiltechnik GmbH, 33102 Paderborn (DE)
(72) Erfinder: PEDERSEN, Roald E. H., N-2818 Gjovik (NO); ENG, Stein Morten, N-2847 Kolbu (NO); WIBBEKE, Michael, 33102 Paderborn (DE)
(74) Vertreter: Griepenstroh, Jörg
(86) Internationale Anmeldenummer: PCT/EP2011/004900
(87) Internationale Veröffentlichungsnummer: WO 2012/041516

(56) Entgegenhaltungen:
- EP-A2- 0 967 044
- DE-A1- 4 237 361
- DE-A1-102004 025 492
- JP-A- 2008 080 394
- JP-B2- H 032 434
- SU-A1- 1 830 797
- US-A1- 2009 294 410

## Beschreibung

Die vorliegende Erfindung betrifft ein Verfahren zur Herstellung eines Hybridbauteils gemäß den Merkmalen im Oberbegriff von Patentanspruch 1.

Die vorliegende Erfindung betrifft weiterhin eine Schweißnietverbindung zwischen einem ersten Bauteil und einem zweiten Bauteil gemäß den Merkmalen im Oberbegriff von Patentanspruch 14. Der Oberbegriff der jeweiligen Ansprüche ist in US2009/294410A1 offenbart. Zur Koppelung von zwei Bauteilen gibt es verschiedene Fertigungsverfahren. Die Koppelungsverfahren lassen sich in formschlüssige, kraftschlüssige und stoffschlüssige Verfahren einteilen. So wird beispielsweise bei einem formschlüssigen Koppelungsverfahren durch eine Umstellung von Kanten oder Flanschen ein Formschluss hergestellt. Auch ist ein formschlüssiges Verfahren beispielsweise durch Vernieten zweier Bauteile bekannt.

Bei einem kraftschlüssigen Koppelungsverfahren wird beispielsweise eine Welle in ein Lager eingepresst und ist mit diesem durch eine Übermaßpassung fest verbunden. Bei einem formschlüssigen Koppelungsverfahren wird wiederum unterschieden zwischen Klebeverbindungen und thermischen Fügeverfahren. Bei einer Klebeverbindung wird Klebstoff auf einem Bauteil aufgetragen und das Bauteil mit einem anderen Bauteil verklebt. Durch ausgereifte werkstofftechnische Untersuchungen ist es heutzutage möglich, für die jeweils zu fügenden Bauteile Klebstoffe und Klebeverfahren zu verwenden, die speziell auf die Werkstoffe der Bauteile selbst abgestellt sind und eine hochfeste Klebeverbindung herstellen. Bei einer Klebeverbindung verbleibt jedoch immer ein Restrisiko bezüglich der erreichbaren Festigkeit, da sich der aufgetragene Kleber unter Umständen nicht entsprechend mit der Oberfläche verbindet, auf die er aufgetragen ist. Darüber hinaus sind Klebeverbindungen einem Alterungsprozess unterzogen, wobei die Klebekraft bereits nach wenigen Jahren nachlassen könnte.

Weiterhin gibt es thermische Fügeverfahren, wobei hier beispielsweise ein Löten oder aber ein Schweißen zum Einsatz kommen. Insbesondere beim Schweißen werden die zu verbindenden Bauteile im Bereich eines Schweißpunktes oder aber einer Schweißnaht fest miteinander verbunden. Hierbei schmilzt das jeweilige Werkstoffgefüge beider Bauteile im Bereich der Schweißnaht kurzzeitig auf und verbindet sich mit dem Werkstoffgefüge des korrespondierenden Bauteils. Unter Umständen ist es notwendig, dass Schweißzusatzwerkstoffe zum Einsatz kommen. Die Schweißverbindung stellt dabei eine auch über Jahrzehnte lang sichere und hochfeste Verbindungsmöglichkeit dar.

Es gibt jedoch Anwendungsfälle oder aber auch Materialien, bei denen eine Schweißverbindung nicht hergestellt werden kann oder aber nur mit hohem Aufwand realisiert werden kann. Ersterenfalls ist es nicht möglich, ein Faserverbundwerkstoffbauteil mit einem metallischen Bauteil in einem Schweißvorgang zu koppeln. Hier ist es maßgeblich nur möglich, eine formschlüssige Verbindung oder aber einen Klebevorgang durchzuführen.

Bei Bauteilen, die zwei voneinander verschiedene metallische Werkstoffe oder aber andersartige Legierungen aufweisen, sind diese im Höchstfall bedingt thermisch fügbar. So ist es beispielsweise notwendig, bei der Koppelung einer metallischen Legierung mit einer Kupferlegierung einen Lötvorgang durchzuführen und entsprechenden Schweißzusatzwerkstoff hinzuzufügen und ggf. eine Schutzgasatmosphäre zu erzeugen. Der Schweißlötvorgang ist somit höchstaufwendig durchzuführen. Analoge Ausführungen gelten für metallische Legierungen, die mit einem Leichtmetall gekoppelt werden sollen. Ebenfalls gibt es metallische Legierungen, die untereinander nur mit hohem Aufwand schweißbar sind.

Hier ist also ein hoher Produktionsaufwand, insbesondere in der Serienfertigung von Blechbauteilen, besonders für den Automobilbau, zu betreiben, um reproduzierbare und produktionssichere Schweißverbindungen oder aber Schweißlötverbindungen herzustellen.

Aus dem Stand der Technik sind Schweißnietverbindungen bekannt, die eine Kombination aus formschlüssiger und stoffschlüssiger Verbindung an zwei zu verbindenden Bauteilen realisieren. So ist beispielsweise aus der WO 97/15418 ein Verfahren zur Koppelung zweier Bauteile bekannt, bei dem ein Hohlniet in eine Öffnung eines ersten Bauteils eingesetzt wird und anschließend der Grund des Hohlniets mit dem zweiten Bauteil stoffschlüssig durch thermisches Fügen gekoppelt wird. Der Grund des Hohlnietes ist somit mit dem zweiten Bauteil fest verbunden. Der Hohlniet überlappt mit einem Flanschbereich einen Randbereich in dem ersten Bauteil und verbindet somit das erste Bauteil mit dem zweiten Bauteil durch einen Formschluss. Die bekannte Herstellungsmethode bedarf jedoch einer großen Öffnung in dem ersten Bauteil zur Durchführung des Niets, so dass ein Schweißgerät entsprechend in dem Grundbereich bzw. Öffnungsbereich des Niets vordringen kann. Darüber hinaus erhebt sich der umlaufende Flansch über die Oberfläche des ersten Bauteils, um dieses formschlüssig zu koppeln.

Ferner sind aus der DE 10 2004 025 492 A1, der DE 42 37 361 A1, der EP 0 967 044 A2 sowie der SU 1 830 797 A1 Schweißnietverbindungen bekannt.

Aufgabe der vorliegenden Erfindung ist es daher, eine aus dem Stand der Technik bekannte Schweißnietverbindung sowie ein Verfahren zu deren Herstellung zu verbessern.

Die zuvor genannte Aufgabe wird erfindungsgemäß mit einem Verfahren zur Herstellung eines Hybridbauteils mit den Merkmalen im Patentanspruch 1 gelöst.

Der vorrichtungstechnische Teil der Aufgabe wird weiterhin erfindungsgemäß mit einer Schweißnietverbindung zwischen einem ersten Bauteil und einem zweiten Bauteil mit den Merkmalen im Patentanspruch 14 gelöst.

Vorteilhafte Ausführungsvarianten der vorliegenden Erfindung sind Bestandteil der abhängigen Patentansprüche.

Bei dem erfindungsgemäßen Verfahren zur Herstellung eines Hybridbauteils, wobei ein erstes Bauteil mit einem zweiten Bauteil gekoppelt wird und das erste Bauteil und das zweite Bauteil aus zwei voneinander verschiedenen Werkstoffen ausgebildet sind und die Werkstoffe im Wesentlichen nicht thermisch fügbar sind, wobei in dem ersten Bauteil ein Schweißniet vorgesehen ist und der Schweißniet mit dem zweiten Bauteil thermisch gefügt ist, wobei der Schweißniet in das erste Bauteil eingestanzt und vernietet und anschließend das erste Bauteil mit dem zweiten Bauteil in Kontakt gebracht und zumindest bereichsweise verklebt wird und der Schweißniet wird mit dem zweiten Bauteil thermisch gefügt, wird erfindungsgemäß das erste Bauteil mit dem zweiten Bauteil zumindest bereichsweise verklebt und der Schweißniet mit seiner Oberseite im Wesentlichen plan mit der Bauteiloberfläche des ersten Bauteils abschließend eingestanzt und vernietet wird, wobei das erste Bauteil eine Wandstärke zwischen 0,5 mm und 10 mm aufweist.

Hierbei können im Wesentlichen miteinander nicht thermisch fügbare bzw. nicht schweißbare Werkstoffe verarbeitet werden. Der Schweißniet selber wird bevorzugt aus dem gleichen Werkstoff wie das zweite Bauteil hergestellt oder aber aus einem Werkstoff, der mit dem zweiten Bauteil besonders einfach thermisch fügbar ist. Weiterhin bevorzugt besteht der Schweißniet aus einem harten Werkstoff, der in einen weichen Werkstoff des ersten Bauteils eingebracht wird, oder aber aus einem weichen Werkstoff, der in einen harten Werkstoff des ersten Bauteils eingebracht wird. Hierdurch ist es möglich, den Schweißniet in dem ersten Bauteil zu vernieten.

Das erfindungsgemäße Verfahren zeichnet sich insbesondere dadurch aus, dass der Schweißniet bereits während des Umformvorganges in dem Umformwerkzeug für das erste Bauteil mit eingebracht wird. Anschließend werden das erste Bauteil und das zweite Bauteil miteinander in Kontakt gebracht und der Schweißniet wird durch thermisches Fügen, beispielsweise durch Widerstandspunktschweißen, mit dem zweiten Bauteil gekoppelt. Der in dem ersten Bauteil formschlüssig vernietete Schweißniet stellt somit eine stoffschlüssige Verbindung mit dem zweiten Bauteil her und verbindet somit das erste und das zweite Bauteil wiederum über den Formschluss.

In einer bevorzugten Ausführungsvariante der vorliegenden Erfindung wird der Schweißniet in das erste Bauteil eingebracht, während das erste Bauteil in einem Umformwerkzeug umgeformt wird. Der Schweißniet wird hierbei während des Umformvorganges in das erste Bauteil eingebracht, vernietet und anschließend wird das erste Bauteil als Umformbauteil aus dem Umformwerkzeug entnommen, mit dem darin vernieteten Schweißniet.

Weiterhin ist es auch möglich, den Schweißniet in das Umformwerkzeug automatisiert zuzuführen. Hierdurch ergeben sich besonders kurze Taktzeiten, da eine Blechplatine zur Herstellung des ersten Bauteils in das Umformwerkzeug eingelegt wird und gleichzeitig während des Umformvorganges entsprechend der Bereich zum Einbringen des Schweißnietes ausgestanzt wird und der Schweißniet in dem ersten Bauteil eingebracht und vernietet wird.

Das Ausstanzen kann durch den Schweißniet selbst erfolgen oder aber durch ein separates Ausstanzwerkzeug in dem Umformwerkzeug selber. Hierdurch kann zur Herstellung des ersten Bauteils eine Fertigungstaktzeit verwendet werden, wie sie alleine durch die Umformung zustande kommt. Eine Verzögerung durch das Einbringen des Schweißnietes oder gar eine zusätzliche Station in der Fertigungslinie entfallen.

In einer weiteren bevorzugten Ausführungsvariante der vorliegenden Erfindung können auch drei Bauteile oder aber mehr als drei Bauteile mit dem erfindungsgemäßen Verfahren gefügt werden. Hierbei wird zunächst der Schweißniet nicht nur in das erste Bauteil, sondern in ein erstes und ein drittes Bauteil eingebracht und die beiden Bauteile werden über den Schweißniet miteinander formschlüssig vernietet. Im Anschluss hieran wird der Schweißniet an das zweite Bauteil herangeführt und mit diesem verschweißt. Hierdurch sind drei Bauteile miteinander gekoppelt, wobei das erste und das dritte Bauteil formschlüssig über den Schweißniet gekoppelt sind und dann der Schweißniet mit dem dritten Bauteil stoffschlüssig gekoppelt wird. Im Rahmen der Erfindung können jedoch auch zwei, drei, vier oder gar mehr Bleche über einen Schweißniet miteinander formschlüssig vernietet werden und anschließend wird der Schweißniet mit einem jeweils weiteren Bauteil stoffschlüssig gekoppelt.

Ebenfalls ist es mit dem erfindungsgemäßen Schweißniet möglich, eine Mehrblechverbindung herzustellen, indem der Schweißniet in das erste Bauteil eingebracht wird und in dem ersten Bauteil vernietet wird. Anschließend werden an das erste Bauteil ein zweites Bauteil und von der dem zweiten Bauteil gegenüberliegenden Seite ein drittes Bauteil herangeführt und anschließend vernietet. Es entsteht somit ein Sandwichbauteil, indem das erste Bauteil mittig angeordnet ist und über eine stoffschlüssige Verbindung mit dem Schweißniet beidseitig von einem zweiten und einem dritten Bauteil eingefasst ist.

Weiterhin vorteilig zur Erhöhung der Festigkeit ist es möglich, das erste Bauteil mit dem zweiten Bauteil zumindest bereichsweise zu verkleben und anschließend beide Bauteile über den Schweißniet miteinander zu koppeln. Hierdurch wird eine Klebenietverbindung hergestellt, die eine besonders hohe Festigkeit hat, da sich synergetisch sowohl der Formschluss als auch der Stoffschluss ergänzen. Insbesondere ist es möglich, durch die exakte Lagefixierung von erstem Bauteil zu zweitem Bauteil über die Schweißnietverbindung ein Aushärten des Klebevorganges zu realisieren. Es kommt somit zu keiner Relativverschiebung zwischen erstem Bauteil und zweitem Bauteil während des Aushärtevorgangs des Klebstoffes, die sich ggf. auf die Langlebigkeit der Klebeverbindung negativ auswirken könnte.

Weiterhin bevorzugt werden die Bauteile zumindest bereichsweise beschichtet und anschließend werden beide Bauteile miteinander über den Schweißniet gekoppelt. Hierbei kann es sich um eine Korrosionsschutzbeschichtung oder aber auch um eine Klebebeschichtung handeln. Die Beschichtung kann derart ausgebildet sein, dass sie durch einen Nachbehandlungsprozess, beispielsweise durch einen KTL-Prozess, entsprechend verflüssigt und/oder aushärtet und somit eine weitere Klebeverbindung oder aber eine fest auf die Bauteile aufgeschmolzene Korrosionsschutzbeschichtung ausbildet. Hierdurch wird sichergestellt, dass durch den thermischen Fügeprozess im Bereich des Schweißnietes und im Bereich der den Schweißniet umgebenden Wärmeeinflusszone nicht durch die thermische Einwirkung eine Beschädigung der Beschichtung erfolgt. Insbesondere metallische Bauteile werden somit langfristig vor Korrosion geschützt.

Weiterhin bevorzugt wird der Schweißniet während des Umformvorgangs in das erste Bauteil eingestanzt und vernietet, vorzugsweise in einem Arbeitsschritt ohne Vorlochen. Der Schweißniet wird hierbei besonders bevorzugt dem Umformwerkzeug automatisiert zugeführt. Der Schweißniet selbst kann einen Stanzkragen aufweisen, der das Einstanzen in das erste Bauteil entsprechend erleichtert. Das Vernieten selbst kann mit dem erfindungsgemäßen Verfahren durch den Umformvorgang stattfinden. Vorteilig ist, dass durch das Austragen über den Schweißniet selber kein Werkzeugverschleiß an einem Ausstanzwerkzeug stattfindet.

Ebenfalls ist es im Rahmen der Erfindung vorstellbar, dass in dem Umformwerkzeug ein separat verfahrbares Ausstanz- und Nietwerkzeug ausgebildet ist oder aber das Ausstanz- und Nietwerkzeug sich mit dem Umformwerkzeug absenkt und durch die von dem Umformwerkzeug, beispielsweise einer Umformpresse, aufgebrachten Umformkräfte nutzt, um den Ausstanz- und/oder Nietvorgang durchzuführen. Wesentlicher Vorteil ist, dass eine besonders kurze Taktzeit realisiert wird und das erste Bauteil nicht durch ein späteres Ausstanzen und Vernieten mit Schweißnieten in seiner herzustellenden Endkontur schwankt.

In einer weiteren bevorzugten Ausführungsvariante der vorliegenden Erfindung wird der Schweißniet mit einer Unterseite zu dem zweiten Bauteil zeigend in das erste Bauteil eingebracht, wobei die Unterseite des Schweißniets eine Wölbung aufweist und anschließend die Unterseite mit einer Oberfläche des zweiten Bauteils verschweißt wird. Hierbei ist der Schweißniet derart ausgebildet, dass er zu dem zweiten Bauteil hin zeigend eine Buckelwölbung aufweist, die im Wesentlichen hemisphärisch oder aber bauchartig von dem Schweißniet wegzeigend ausgebildet ist. Hierdurch wird sichergestellt, dass auch bei nicht zwei plan aufeinander liegenden Oberflächen von erstem Bauteil und zweitem Bauteil der Schweißniet in Kontakt mit dem zweiten Bauteil steht. Ebenfalls ist es möglich, dass der Schweißniet nicht zu einhundert Prozent derart in dem ersten Bauteil eingebracht ist, dass seine Fügeoberfläche mit dem zweiten Bauteil plan aufeinander liegt. Gerade die zum zweiten Bauteil hin gerichtete Wölbung erbringt erfindungsgemäß den Vorteil, dass dennoch immer ein Kontakt zwischen Schweißniet und zweitem Bauteil sichergestellt wird.

Insbesondere ist dieser Kontakt wichtig für das thermische Fügeverfahren, welches besonders bevorzugt als Widerstandsschweißen durchgeführt wird. Ebenfalls wiederum ist es hier möglich, dass stets ein Kontakt für das Widerstandsschweißen zwischen Schweißniet und zweitem Bauteil auf Grund der Wölbung hergestellt wird.

Als besonders bevorzugte Ausführungsvariante wird durch das thermische Fügen die Wölbung derart abgeflacht, dass das erste Bauteil und das zweite Bauteil zumindest in dem den Schweißniet umrandenden Bereich spaltfrei aneinander liegen. Während des thermischen Fügevorganges erfolgt somit ein Aufschmelzen des Materials des Schweißniets im Bereich der Wölbung, so dass die Wölbung maßgeblich abgeflacht wird. Zunächst wird durch die Wölbung ein Kontakt zwischen Schweißniet und zweitem Bauteil sichergestellt, wobei auf Grund des Widerstandsschweißverfahrens die Wölbung entsprechend abgeflacht wird, dass das erste Bauteil und das zweite Bauteil zumindest in dem den Schweißniet umrandenden Bereichen spaltfrei aneinander liegen.

Im Rahmen der Erfindung ist es ebenfalls vorstellbar, dass die Wölbung während des Fügevorganges von erstem Bauteil und zweitem Bauteil zumindest bereichsweise in das zweite Bauteil eingeformt wird und/oder thermisch gefügt wird. Ebenfalls ist es hier erfindungsgemäß möglich, das erste Bauteil und das zweite Bauteil entsprechend spaltfrei miteinander zu koppeln.

Bei dem erfindungsgemäßen Verfahren wird ein Schweißniet verwendet, der bei einer Wandstärke des ersten Bauteils zwischen 0,5 mm und 10 mm mit seiner Oberseite im Wesentlichen plan mit einer Bauteiloberfläche des ersten Bauteils abschließend eingebracht wird. Bei einem ersten Bauteil, das eine Wandstärke zwischen 0,5 mm und 10 mm, insbesondere 0,5 mm und 7 mm und ganz besonders bevorzugt zwischen 0,5 mm und 5 mm aufweist, wird somit der Schweißniet mit seiner Oberseite im Wesentlichen plan mit der Bauteiloberfläche des ersten Bauteils abschließend eingestanzt und vernietet. Nach dem thermischen Fügevorgang ist die Oberseite somit die sichtbare Seite des Schweißnietes. Hierdurch wird eine erfindungsgemäß hoch effiziente und dauerfeste Koppelung zwischen erstem Bauteil und zweitem Bauteil hergestellt, wobei der Schweißniet auf Grund der im Wesentlichen plan mit der Bauteiloberfläche des ersten Bauteils abschließenden Oberfläche optisch kaum bzw. nicht wahrnehmbar ist.

Weiterhin besonders bevorzugt weist der Schweißniet vor dem Einbringen in das erste Bauteil eine Höhe auf, die größer ist als die Wandstärke des ersten Bauteils, wobei nach dem thermischen Fügen der Schweißniet im Wesentlichen plan mit dem ersten Bauteil abschließt. Hierbei kann die Höhe des Schweißniets bereits während des Nietvorgangs im Umformvorgang derart vernietet werden, dass bereits hier das erste Bauteil mit dem Schweißniet im Wesentlichen plan abschließt. Alternativ oder ergänzend hierzu kann die Höhe des Schweißniets während des thermischen Fügevorganges, insbesondere des Widerstandspunktschweißens, durch Aufschmelzen bzw. Flachdrücken derart reduziert werden, dass ebenfalls hier eine im Wesentlichen plane Oberfläche am ersten Bauteil nach Abschluss des Fügevorganges ausgebildet ist. Hierdurch wird sichergestellt, dass der Schweißniet ausreichend in dem ersten Bauteil vernietet ist und entsprechend während des Schweißvorganges aufschmelzender Werkstoffe derart nachfließt, dass nicht im Bereich des Schweißens eine Mulde oder ähnliches entsteht. Eine stets sichere und reproduzierbare Schweißverbindung wird somit während des erfindungsgemäßen Fertigungsverfahrens hergestellt.

In einer weiteren bevorzugten Ausführungsvariante wird der Schweißniet in einem Arbeitsschritt in das erste Bauteil eingebracht, vernietet und mit dem zweiten Bauteil verschweißt. Hierbei kann das Verschweißen in Ergänzung mit dem Umformvorgang stattfinden. Es werden also maßgeblich das erste Bauteil umgeformt und zumindest bereichsweise das zweite Bauteil bei gleichzeitigem Einbringen, Vernieten und Verschweißen des Schweißniets gefügt. Alternativ dazu kann auch ein separates Fertigungsverfahren Bestandteil sein, bei dem der Schweißniet entsprechend ebenfalls in einem Arbeitsschritt in das erste Bauteil eingebracht und vernietet wird und entsprechend mit dem zweiten Bauteil thermisch gefügt ist.

Die vorliegende Erfindung betrifft weiterhin eine Schweißnietverbindung aufweisend ein erstes Bauteil, ein zweites Bauteil und einen Schweißniet, wobei das erste Bauteil und das zweite Bauteil aus voneinander verschiedenen Werkstoffen ausgebildet sind und die Werkstoffe untereinander im Wesentlichen nicht thermisch fügbar sind und wobei in das erste Bauteil ein Schweißniet eingebracht ist, wobei der Schweißniet thermisch mit dem zweiten Bauteil gekoppelt ist und so das erste Bauteil mit dem zweiten Bauteil formschlüssig koppelt. Die Schweißnietverbindung zeichnet sich erfindungsgemäß dadurch aus, dass der Schweißniet als kreisrunde flache Scheibe ausgebildet ist und einen oberen Kragen und einen unteren Kragen aufweist, wobei der obere Kragen in Relation zu dem unteren Kragen überstehend ausgebildet ist, wobei zwischen dem ersten Bauteil und dem zweiten Bauteil zumindest bereichsweise ein Klebstoff angeordnet ist, wobei der Schweißniet bei einer Wandstärke zwischen 0,5 mm und 10 mm des ersten Bauteils mit seiner Oberseite im Wesentlichen plan mit einer Bauteiloberfläche des ersten Bauteils abschließend angebracht ist.

Der Schweißniet bei der erfindungsgemäßen Schweißnietverbindung ist derart ausgebildet, dass er sich sowohl mit seinem oberen Kragen als auch mit seinem unteren Kragen jeweils in dem ersten Bauteil formschlüssig lagefixiert und dann durch thermisches Fügen mit dem zweiten Bauteil stoffschlüssig gekoppelt wird. Durch die formschlüssige Kopplung mit dem ersten Bauteil ist somit auch das erste Bauteil mit dem zweiten Bauteil fest verbunden.

Das Einbringen des Schweißnietes zeichnet sich insbesondere erfindungsgemäß dadurch aus, dass der Schweißniet zumindest an einer Oberfläche, bevorzugt an beiden Oberflächen des ersten Bauteils, im Wesentlichen plan mit dem ersten Bauteil abschließt. Somit ergibt sich ein haptischer und optischer planer Eindruck und die Schweißnietverbindung ist kaum bzw. nicht wahrnehmbar. Hierdurch ist es möglich, auch Sichtflächen mit der erfindungsgemäßen Schweißnietverbindung auszustatten, ohne dass diese einer besonderen Nacharbeit bedürfen. Darüber hinaus ist ein Überstehen des Schweißniets an einer Bauteiloberfläche des ersten Bauteils durch das plane Abschließen mit dieser ausgeschlossen. Eine Verletzungsgefahr oder aber Behinderung von vorbei geführten Teilen, beispielsweise einem Kabelbaum oder ähnlichem, wird nicht hervorgerufen. Weiterhin bevorzugt erstreckt sich von dem oberen Kragen des Schweißniets zu dem unteren Kragen ein muldenartiger Talbereich. Dies erfolgt im Querschnitt und umläuft den Schweißniet umfangsseitig. Der Talbereich besitzt also im Gegensatz zu dem oberen Kragen bzw. dem unteren Kragen einen deutlich reduzierten Durchmesser, so dass sich hierzu korrespondierend in dem ersten Bauteil die formschlüssige Koppelung mit diesem ausbildet.

Insbesondere besitzt der Schweißniet eine Oberseite und eine Unterseite, wobei der obere Kragen als seitlich umlaufende Verlängerung der Oberseite ausgebildet ist und der untere Kragen als seitlich umlaufende Verlängerung der Unterseite ausgebildet ist. Insbesondere im Zusammenspiel mit dem muldenartigen Talbereich ist es somit möglich, den Schweißniet im Wesentlichen plan in das erste Bauteil einzubringen, so dass dies nicht sichtbar und/oder nicht fühlbar überstehend ausgebildet ist.

Für das thermische Fügen zwischen Schweißniet und zweitem Bauteil bietet es sich insbesondere an, dass der Schweißniet an der Unterseite eine Wölbung aufweist, die durch den thermischen Fügevorgang zumindest teilweise abgeflacht ist und/oder die Wölbung in einen Fügefläche des zweiten Bauteils eingepresst ist. Hierdurch wird sichergestellt, dass für den thermischen Fügevorgang, insbesondere das Widerstandspunktschweißen ein Kontakt zwischen Schweißniet und zweitem Bauteil hergestellt ist, auch wenn das erste Bauteil und das zweite Bauteil nicht flächig aneinander liegen oder aber eine Wölbung im ersten Bauteil und/oder im zweiten Bauteil es verhindert, dass ein flacher Schweißniet vor dem Fügevorgang direkt an dem zweiten Bauteil anliegen würde. Dies wird eben gerade durch die Wölbung des Schweißniets in Richtung zu dem zweiten Bauteil verhindert und durch ein Aufschmelzen der Wölbung wird eine stoffschlüssige Verbindung zwischen dem Schweißniet und dem zweiten Bauteil hergestellt oder aber die Wölbung wird während des Schweißvorganges in das zweite Bauteil eingedrückt und dann stoffschlüssig mit diesem gekoppelt.

Insbesondere hat sich die erfindungsgemäße Schweißnietverbindung bei den Materialkombinationen von erstem Bauteil, zweitem Bauteil und Schweißniet als besonders vorteilig erwiesen:
Aluminiumbauteil mit Aluminiumschweißniet, der mit einem Stahlbauteil verschweißt wird.

Ein Aluminiumbauteil mit einem Stahlschweißniet, der an ein weiteres Stahlbauteil gekoppelt wird.

Weiterhin ist jedoch auch möglich, mit der erfindungsgemäßen Schweißnietverbindung gängige Leichtmetallmaterialien, beispielsweise Guss-, Strangpress- oder aber Blechbauteile aus Leichtmetall, insbesondere aus Aluminium, weiterzuverarbeiten. Ebenfalls können Kunststoffbauteile oder aber Faserverbundbauteile mit Leichtmetall oder aber Metallbauteilen gekoppelt werden. Hierbei wird in das Kunststoffbauteil entsprechend ein metallischer oder leichtmetallischer Schweißniet eingebracht und anschließend mit dem Metall- oder Leichtmetallbauteil thermisch gefügt. Ebenfalls ist es möglich, Magnesium oder aber Titanwerkstoffe weiter zu verarbeiten.

Durch das erfindungsgemäße Verfahren sowie die erfindungsgemäße Schweißnietverbindung ist es möglich, den Schweißniet direkt ohne Vorloch in das erste Bauteil einzubringen und anschließend thermisch zu fügen. Hierdurch ergeben sich keine Toleranzprobleme im Lochbild. Durch das ergänzende Kleben und/oder Beschichten ist es möglich, die Steifigkeit eines Hybridbauteils entsprechend zu erhöhen.

Im Bereich der Automobiltechnik können somit Aluminiumrahmen oder Verstärkungsbauteile an Kraftfahrzeugkarosserien aus Stahlbauteilen in einfacher und effizienter sowie höchstfester Bauweise gekoppelt werden. Ebenfalls ist es möglich, einen Stahlrahmen oder aber eine Stahlkarosserie mit einer Aluminiumsäule bzw. einer Leichtmetallsäule auszubilden. Mit dem erfindungsgemäßen Herstellungsverfahren sowie mit der erfindungsgemäßen Schweißnietverbindung sind Zugfestigkeiten von 600, 800 oder aber mehr als 1.000 MPa möglich.

Besonders vorteilig zu oben genannten Materialkombinationen, insbesondere für die Koppelung von Aluminiumbauteilen in einer Stahlkarosserie oder aber von Aluminiumbauteilen in einer Stahlkarosserie, haben sich nachfolgende geometrische Abmessungen des Schweißniets erwiesen.

Bevorzugt ist der Schweißniet mit einem oberen Durchmesser ausgebildet, der zwischen 5 mm und 20 mm, bevorzugt zwischen 10 mm und 14 mm und insbesondere zwischen 11 mm und 13 mm aufweist. Hierzu korrespondierend weist der Schweißniet einen unteren Durchmesser im Bereich des unteren Kragens zwischen 4 mm und 8 mm, insbesondere zwischen 6 mm und 14 mm und besonders bevorzugt zwischen 10 mm und 11 mm auf.

Durch den im Vergleich zum unteren Durchmesser größeren oberen Durchmesser ist es somit möglich, den Schweißniet besonders vorteilig in das erste Bauteil einzubringen und mit diesem zu vernieten. Die nachfolgende herzustellende formschlüssige Verbindung, also das Halten des ersten Bauteils an dem zweiten Bauteil, nachdem der Schweißniet mit dem zweiten Bauteil gekoppelt wurde, wird entsprechend durch den größeren oberen Durchmesser unterstützt.

Für den Nietvorgang, aber auch das formschlüssige Halten des erstens Bauteils an dem zweiten Bauteil nach der thermischen Koppelung von Schweißnieten mit dem zweiten Bauteil hat es sich weiterhin als besonders vorteilig erwiesen, wenn sich von dem oberen Kragen zu dem Talbereich hin eine umlaufende Fase erstreckt, wobei die Fase insbesondere in einem Winkel zwischen 40° und 60°, bevorzugt zwischen 44° und 52° zu der Oberseite verläuft. Die Fase bildet ein Optimum zwischen formschlüssigen Halten des ersten Bauteils an dem zweiten Bauteil sowie einer Unterstützung des Einbringens durch Ausstanzen sowie Vernietens.

Insgesamt weist der Schweißniet eine Dicke zwischen 1 mm und 5 mm, insbesondere zwischen 2 mm und 4 mm und besonders bevorzugt zwischen 2,5 mm und 3 mm auf. Er ist somit auf Grund seines geringen Durchmessers und seiner geringen Dicke insbesondere im Kraftfahrzeugbau nahezu im gesamten Karosseriebau einsetzbar. Der Schweißniet ist optisch kaum wahrnehmbar und nur marginal größer gegenüber den bewährten, im Karosseriebau eingesetzten Punktschweißverfahren. Insbesondere kann auf bereits vorhandene Punktschweißressourcen, also Infrastruktur, die ein Widerstandspunktschweißen durchführen kann, zurückgegriffen werden. Es sind somit bei einer Umstellung der Fertigungslinie auf neue Werkstoffe der zu fügenden Bauteile nur geringe Modifikationen notwendig. Schweißroboter mit Widerstandselektroden können entsprechend auch für die Schweißnietverbindung einsetzbar sein.

Weiterhin bevorzugt weist der obere Kragen und/oder der untere Kragen an seiner jeweiligen Seite eine umlaufende Kante auf, wobei die umlaufende Kante bevorzugt im Wesentlichen orthogonal zu der Oberseite und/oder Unterseite verlaufend ausgebildet ist. Dies wirkt sich wiederum vorteilig auf den Nietvorgang aus, da ein entsprechendes Nachfließen des Materials während des Nietens unterbunden wird.

Zur Unterstützung des Ausstanzvorgangs weist der Schweißniet weiterhin bevorzugt an seiner Unterseite einen Stanzkragen auf, wobei der Stanzkragen während des thermischen Fügevorganges des Schweißniets mit dem zweiten Bauteil derart abgeflacht wird, dass im Wesentlichen hier wiederum eine plane Oberfläche entsteht, wobei das erste Bauteil und das zweite Bauteil spaltfrei aneinander liegen.

Im Rahmen der Erfindung werden das erfindungsgemäße Verfahren sowie die erfindungsgemäße Schweißnietverbindung maßgeblich zur Verbindung von Aluminiumblechen mit einem Stahlblech genutzt. Somit werden beispielsweise Stahlschweißnieten in Aluminiumblech eingebracht und mit einem Stahlblech gekoppelt oder aber Aluminiumnieten in ein Stahlblech, wobei die Aluminiumnieten anschließend mit einem Aluminiumblech gekoppelt werden.

Im Rahmen der Erfindung ist es jedoch auch möglich, drei voneinander im Wesentlichen nicht thermisch fügbare Werkstoffe miteinander zu koppeln. So ist es beispielsweise möglich, Aluminium, Magnesium und Stahl miteinander zu koppeln. Insbesondere die nachfolgend beschriebene Dreiblechkonstruktion kann hier zum Einsatz kommen. Im Rahmen der Erfindung wäre es ebenfalls vorstellbar, entsprechende Schweißnieten in Leichtbauwerkstoffe einzubringen und diese dann wiederum mit metallischen Werkstoffen zu koppeln.

Weitere Vorteile, Merkmale, Eigenschaften und Aspekte der vorliegenden Erfindung sind Bestandteil der folgenden Beschreibung. Die schematischen Figuren dienen dem einfachen Verständnis der Erfindung. Es zeigen:
- Figur 1: einen erfindungsgemäßen Schweißniet in einer Unteransicht,
- Figur 2: einen erfindungsgemäßen Schweißniet in einer Querschnittsansicht entlang der Schnittlinie II - II,
- Figur 3: ein erfindungsgemäßes Hybridbauteil mit Schweißniet,
- Figur 4: ein erfindungsgemäßes Hybridbauteil in Sandwichbauweise und
- Figur 5: ein erfindungsgemäßes Hybridbauteil in Dreiblechbauweise.

In den Figuren werden für gleiche oder ähnliche Bauteile dieselben Bezugszeichen verwendet, auch wenn eine wiederholte Beschreibung aus Vereinfachungsgründen entfällt.

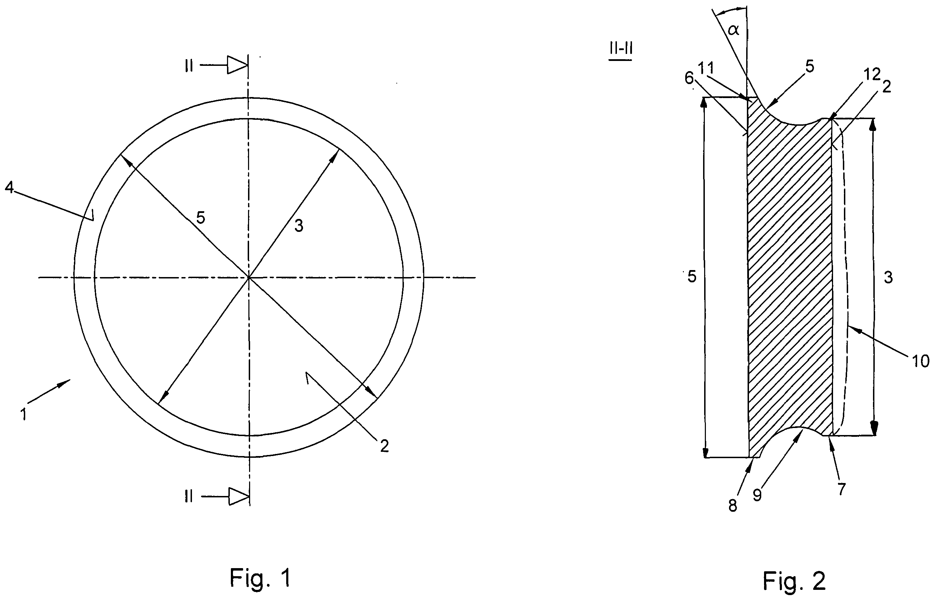

Figur 1 zeigt einen erfindungsgemäßen Schweißniet 1 in einer Ansicht von unten. Gut zu sehen ist die Unterseite 2 mit einem unteren Durchmesser 3. Über den unteren Durchmesser 3 überstehend ist von unten sichtbar die Fase 4, wobei der Schweißniet 1 von dem oberen Durchmesser 5 der hier nicht einsehbaren Oberseite 6 abgeschlossen wird.

Figur 2 zeigt den Schweißniet 1 in einer Querschnittsansicht entlang der Schnittlinie II - II aus Figur 1. Hierbei ist gut zu erkennen, dass der Schweißniet 1 eine Unterseite 2 sowie eine Oberseite 6 aufweist. An der Oberseite 6 besitzt der Schweißniet 1 den oberen Durchmesser 5 und an der Unterseite 2 den unteren Durchmesser 3. Der obere Durchmesser 5 und der untere Durchmesser 3 sind jeweils von einer umlaufenden Kante 7, 8 begrenzt, die im Wesentlichen orthogonal zu der Oberseite 6 bzw. Unterseite 2 steht. Zwischen den beiden Kanten 7, 8 erstreckt sich ein muldenartiger Talbereich 9, wobei sich von der oberen Kante 8 zu dem muldenartigen Talbereich 9 ebenfalls die Fase 4 erstreckt. Die Fase 4 besitzt einen Winkel α, der sich bevorzugt in den angegebenen Gradverhältnissen bewegt. An der Unterseite 2 kann erfindungsgemäß gestrichelt dargestellt eine Wölbung 10 ausgebildet sein, die sich beim Vernieten oder aber beim thermischen Fügen entsprechend einebned und/oder in das nicht näher dargestellte zweite Bauteil eindrückt.

Weiterhin dargestellt ist der obere Kragen 11 und der untere Kragen 12, die als Verlängerung der Oberseite 6 bzw. der Unterseite 2 ausgebildet sind.

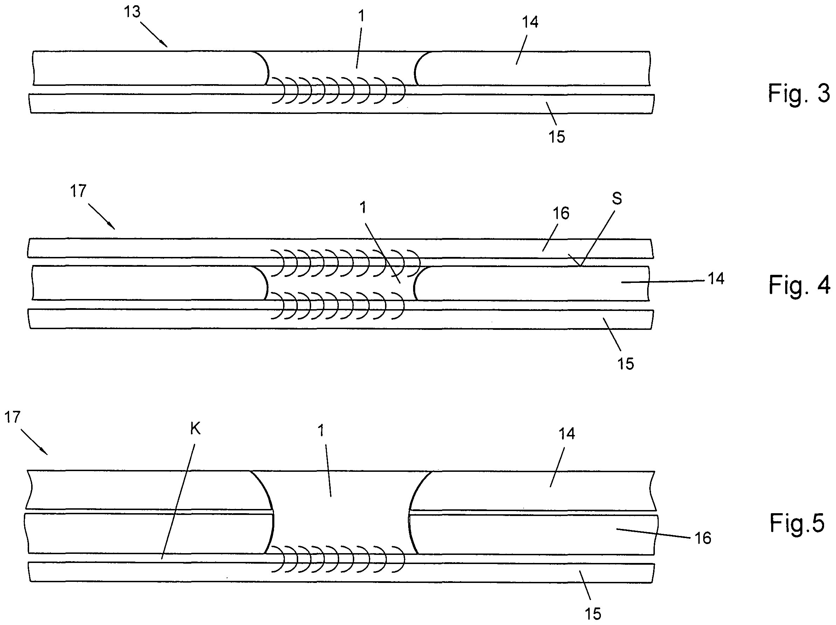

Figur 3 zeigt ein mit dem erfindungsgemäßen Verfahren hergestelltes Hybridbauteil 13, bei dem ein erstes Bauteil 14 mit einem zweiten Bauteil 15 über einen Schweißniet 1 gekoppelt ist. Der Schweißniet 1 ist formschlüssig in dem ersten Bauteil 14 gekoppelt und vernietet. Der Schweißniet 1 ist wiederum selber mit dem zweiten Bauteil 15 stoffschlüssig gekoppelt.

Figur 4 zeigt eine weitere Ausführungsvariante, wobei hier das erste Bauteil 14 analog zu Figur 3 mit dem zweiten Bauteil 15 über den Schweißniet 1 gekoppelt ist. Ergänzend ist auf der dem zweiten Bauteil 15 gegenüberliegenden Seite S ein drittes Bauteil 16 angeordnet, das ebenfalls stoffschlüssig mit dem Schweißniet 1 gekoppelt ist. Folglich ergibt sich in Figur 4 dargestellt eine Dreiblechkonstruktion 17, bei der das zweite Bauteil 15 und das dritte Bauteil 16 sowie der Schweißniet 1 aus einem miteinander thermisch fügbaren Werkstoff ausgebildet sind und das erste Bauteil 14 aus einem im Wesentlichen hiermit nicht thermisch fügbaren Werkstoff ausgebildet ist.

Figur 5 zeigt eine weitere Ausführungsvariante der vorliegenden Erfindung, wobei hier ein erstes Bauteil 14 und ein drittes Bauteil 16 ein Schweißniet 1 formschlüssig durch Vernieten gekoppelt sind.

Der Schweißniet 1 selber ist dann wiederum mit dem zweiten Bauteil 15 stoffschlüssig gekoppelt. Auch hierdurch ergibt sich eine Dreiblechkonstruktion 17, wobei hier jedoch das erste Bauteil 14 und das zweite Bauteil 15 sowie das dritte Bauteil 16 aus einander im Wesentlichen nicht miteinander thermisch fügbaren Werkstoffen ausgebildet sind und wobei das zweite Bauteil 15 und der Schweißniet 1 miteinander thermisch fügbar sind.

Die hier gezeigten Ausschnitte sind exemplarisch dargestellt. Sie können an den Bauteilen 14, 15, 16 vollflächig ausgebildet sein oder aber nur abschnittsweise in einzelnen Berührungspunkten. Zwischen den Bauteilen ist hier der schnellen Übersichtlichkeit halber ein Spalt dargestellt, der beispielsweise mit Klebstoff K gefüllt sein kann. Die Bauteile liegen jedoch erfindungsgemäß spaltfrei aneinander.

### Bezugszeichen:

- 1 -: Schweißniet
- 2 -: Unterseite
- 3 -: unterer Durchmesser
- 4 -: Fase
- 5 -: oberer Durchmesser
- 6 -: Oberseite
- 7 -: Kante zu 3
- 8 -: Kante zu 5
- 9 -: muldenartiger Talbereich
- 10 -: Wölbung
- 11 -: oberer Kragen
- 12 -: unterer Kragen
- 13 -: Hybridbauteil
- 14 -: erstes Bauteil
- 15 -: zweites Bauteil
- 16 -: drittes Bauteil
- 17 -: Dreiblechkonstruktion

- α -: Winkel
- S -: Seite
- K -: Klebstoff

## Patentansprüche

1. Verfahren zur Herstellung eines Hybridbauteils (13), bei dem ein erstes Bauteil (14) mit einem zweiten Bauteil (15) gekoppelt wird, wobei das erste Bauteil (14) und das zweite Bauteil (15) aus zwei voneinander verschiedenen Werkstoffen ausgebildet sind und die Werkstoffe im Wesentlichen nicht thermisch fügbar sind, wobei in dem ersten Bauteil (14) ein Schweißniet (1) vorgesehen ist und der Schweißniet (1) mit dem zweiten Bauteil (15) thermisch gefügt ist, wobei der Schweißniet (1) in das erste Bauteil (14) eingebracht wird und in dem ersten Bauteil (14) vernietet wird und anschließend das erste Bauteil (14) mit dem zweiten Bauteil (15) in Kontakt gebracht wird und der Schweißniet (1) mit dem zweiten Bauteil (15) thermisch gefügt wird, **dadurch gekennzeichnet, dass** das erste Bauteil (14) mit dem zweiten Bauteil (15) zumindest bereichsweise verklebt wird und dass der Schweißniet (1) mit seiner Oberfläche (6) im Wesentlichen plan mit der Bauteiloberfläche des ersten Bauteils (14) abschließend eingestanzt und vernietet wird, wobei das erste Bauteil (14) eine Wandstärke zwischen 0,5 mm und 10 mm aufweist.

2. Verfahren nach Anspruch 1, **dadurch gekennzeichnet, dass** der Schweißniet (1) während eines Umformvorgangs des ersten Bauteils (14) in das erste Bauteil (14) eingebracht und vernietet wird, vorzugsweise werden das Umformen des ersten Bauteils (14) und das Einbringen und Vernieten des Schweißniets (1) in dem ersten Bauteil (14) in einem Umformwerkzeug zusammen durchgeführt.

3. Verfahren nach Anspruch 1 oder 2, **dadurch gekennzeichnet, dass** das erste Bauteil (14) mit einem dritten Bauteil (16) über den Schweißniet (1) formschlüssig gekoppelt wird und anschließend der Schweißniet (1) mit dem zweiten Bauteil (15) stoffschlüssig gefügt wird.

4. Verfahren nach einem der Ansprüche 1 bis 3, **dadurch gekennzeichnet, dass** auf einer Seite des ersten Bauteils (14) ein zweites Bauteil (15) stoffschlüssig mit dem Schweißniet gekoppelt wird und auf der gegenüberliegenden Seite (S) ein drittes Bauteil (16) stoffschlüssig mit dem Schweißniet (1) gekoppelt wird, so dass ein Sandwichbauteil aus mindestens drei zumindest abschnittsweise aufeinanderliegenden Blechen hergestellt wird.

5. Verfahren nach einem der Ansprüche 1 bis 4, **dadurch gekennzeichnet, dass** das erste Bauteil (14) und/oder das zweite Bauteil (15) zumindest bereichsweise beschichtet wird und anschließend werden beide Bauteile miteinander über den Schweißniet (1) gekoppelt.

6. Verfahren nach einem der Ansprüche 1 bis 5, **dadurch gekennzeichnet, dass** der Schweißniet (1) während des Umformvorganges in das erste Bauteil (14) eingestanzt und vernietet wird, vorzugsweise in einem Arbeitsschritt, ohne Vorlochen.

7. Verfahren nach einem der Ansprüche 1 bis 6, **dadurch gekennzeichnet, dass** der Schweißniet (1) dem Umformwerkzeug automatisiert zugeführt wird.

8. Verfahren nach einem der Ansprüche 1 bis 7, **dadurch gekennzeichnet, dass** der Schweißniet (1) mit einer Unterseite (2) zu dem zweiten Bauteil (15) zeigend in dem ersten Bauteil (14) eingebracht wird, wobei die Unterseite (2) eine Wölbung (10) aufweist und anschließend die Unterseite (2) mit einer Oberfläche des zweiten Bauteils (15) verschweißt wird.

9. Verfahren nach einem der Ansprüche 1 bis 8, **dadurch gekennzeichnet, dass** der Schweißniet (1) und das zweite Bauteil (15) durch Widerstandsschweißen miteinander thermisch gefügt werden.

10. Verfahren nach einem der Ansprüche 5 oder 9, **dadurch gekennzeichnet, dass** durch das thermische Fügen die Wölbung (10) abgeflacht wird, so dass das erste Bauteil (14) und das zweite Bauteil (15) zumindest im den Schweißniet (1) umrandenden Bereich spaltfrei aneinanderliegen.

11. Verfahren nach einem der Ansprüche 1 bis 10, **dadurch gekennzeichnet, dass** der Schweißniet (1) bei einer Wandstärke zwischen 0,5 mm und 10 mm, insbesondere 0,5 mm und 7 mm und ganz besonders bevorzugt zwischen 0,5 mm und 5 mm des ersten Bauteils (14) mit seiner Oberseite (6) im Wesentlichen plan mit einer Bauteiloberfläche des ersten Bauteils (14) abschließend eingebracht wird.

12. Verfahren nach einem der Ansprüche 1 bis 11, **dadurch gekennzeichnet, dass** der Schweißniet (1) vor dem Einbringen in das erste Bauteil (14) eine Höhe aufweist, die größer ist als die Wandstärke des ersten Bauteils (14), wobei nach dem thermischen Fügen der Schweißniet (1) im Wesentlichen plan mit dem ersten Bauteil (14) abschließt.

13. Verfahren nach einem der Ansprüche 1 bis 12, **dadurch gekennzeichnet, dass** der Schweißniet (1) in einem Arbeitsschritt in das erste Bauteil (14) eingebracht, vernietet und mit dem zweiten Bauteil (15) verschweißt wird.

14. Schweißnietverbindung aufweisend ein erstes Bauteil (14), ein zweites Bauteil (15) und einen Schweißniet (1), wobei das erste Bauteil (14) und das zweite Bauteil (15) aus voneinander verschiedenen Werkstoffen ausgebildet sind und die Werkstoffe untereinander im Wesentlichen nicht thermisch fügbar sind und wobei in das erste Bauteil (14) ein Schweißniet (1) eingebracht ist, wobei der Schweißniet (1) thermisch mit dem zweiten Bauteil (15) gekoppelt ist und so das erste Bauteil (14) mit dem zweiten Bauteil (15) formschlüssig koppelt, wobei der Schweißniet (1) als kreisrunde flache Scheibe ausgebildet ist und einen oberen Kragen (11) und einen unteren Kragen (12) aufweist, wobei der obere Kragen (11) in Relation zu dem unteren Kragen (12) überstehend ausgebildet ist, **dadurch gekennzeichnet, dass** zwischen dem ersten Bauteil (14) und dem zweiten Bauteil (15) zumindest bereichsweise ein Klebstoff angeordnet ist, wobei der Schweißniet (1) bei einer Wandstärke zwischen 0,5 mm und 10 mm des ersten Bauteils (14) mit seiner Oberseite (6) im Wesentlichen plan mit einer Bauteiloberfläche des ersten Bauteils (14) abschließend eingebracht ist.

15. Schweißnietverbindung nach Anspruch 14, **dadurch gekennzeichnet, dass** sich von dem oberen Kragen (11) zu dem unteren Kragen (12) im Querschnitt ein muldenartiger Talbereich (9) erstreckt.

16. Schweißnietverbindung nach einem der Ansprüche 14 oder 15, **dadurch gekennzeichnet, dass** der Schweißniet (1) eine Oberseite (6) und eine Unterseite (2) aufweist, wobei der obere Kragen (11) als seitlich umlaufende Verlängerung der Oberseite (6) ausgebildet ist und der untere Kragen (12) als seitlich umlaufende Verlängerung der Unterseite (2) ausgebildet ist.

17. Schweißnietverbindung nach einem der Ansprüche 14 bis 16, **dadurch gekennzeichnet, dass** der Schweißniet (1) an der Unterseite (2) eine Wölbung (10) aufweist, die durch den thermischen Fügevorgang zumindest teilweise abgeflacht ist und/oder die Wölbung (10) in eine Fügefläche des zweiten Bauteils (15) eingepresst ist.

18. Schweißnietverbindung nach einem der Ansprüche 14 bis 17, **dadurch gekennzeichnet, dass** der Schweißniet (1) einen oberen Durchmesser (5) im Bereich des oberen Kragens (11) zwischen 5 und 20 mm, bevorzugt wischen 10 und 14 mm und insbesondere zwischen 11 und 13 mm aufweist.

19. Schweißnietverbindung nach einem der Ansprüche 14 bis 18, **dadurch gekennzeichnet, dass** der Schweißniet (1) einen unteren Durchmesser (3) zwischen 4 und 18 mm, bevorzugt zwischen 6 und 14 mm und insbesondere zwischen 10 und 11 mm aufweist.

20. Schweißnietverbindung nach einem der Ansprüche 14 bis 19, **dadurch gekennzeichnet, dass** sich von dem oberen Kragen (11) zu dem Talbereich (9) hin eine umlaufende Fase (4) erstreckt, wobei die Fase (4) insbesondere in einem Winkel (α) zwischen 40 und 60 Grad, bevorzugt zwischen 44 und 52 Grad zu der Oberseite (6) verläuft.

21. Schweißnietverbindung nach einem der Ansprüche 14 bis 20, **dadurch gekennzeichnet, dass** der Schweißniet (1) eine Dicke zwischen 1 und 5 mm, insbesondere zwischen 2 und 4 mm und besonders bevorzugt zwischen 2,5 und 3,5 mm aufweist.

22. Schweißnietverbindung nach einem der Ansprüche 14 bis 21, **dadurch gekennzeichnet, dass** der obere Kragen (11) und/oder der untere Kragen (12) an seiner Seite eine umlaufende Kante (7, 8) aufweist, wobei die umlaufende Kante (7, 8) bevorzugt im Wesentlichen orthogonal zu der Oberseite (6) und/oder Unterseite (2) verlaufend ausgebildet ist.

23. Schweißnietverbindung nach einem der Ansprüche 14 bis 22, **dadurch gekennzeichnet, dass** der Schweißniet (1) an seiner Unterseite (2) einen Stanzkragen aufweist, der den Einbringvorgang in das erste Bauteil (14) erleichtert.

## Claims

1. Method for producing a hybrid component (13), wherein a first component (14) is coupled to a second component (15), wherein the first component (14) and the second component (15) are constructed from two materials which are different from each other and the materials substantially cannot be thermally joined, wherein a weld rivet (1) is provided in the first component (14) and the weld rivet (1) is thermally joined to the second component (15), wherein the weld rivet (1) is introduced into the first component (14) and is riveted in the first component (14) and subsequently the first component (14) is brought into contact with the second component (15) and the weld rivet (1) is thermally joined to the second component (15), **characterised in that** the first component (14) is at least partially adhesively bonded to the second component (15) and **in that** the weld rivet (1) is finally punched and riveted with the surface (6) thereof in a substantially planar manner with respect to the component surface of the first component (14), wherein the first component (14) has a wall thickness between 0.5 mm and 10 mm.

2. Method according to Claim 1, **characterised in that** the weld rivet (1) is introduced into the first component (14) and riveted during a shaping operation of the first component (14), preferably the shaping of the first component (14) and the introduction and riveting of the weld rivet (1) in the first component (14) are carried out together in a shaping tool.

3. Method according to Claim 1 or 2, **characterised in that** the first component (14) is coupled to a third component (16) in a positive-locking manner by means of the weld rivet (1) and subsequently the weld rivet (1) is joined to the second component (15) in a materially engaging manner.

4. Method according to any one of Claims 1 to 3, **characterised in that** at one side of the first component (14) a second component (15) is coupled to the weld rivet in a materially engaging manner and, at the opposite side (S), a third component (16) is coupled to the weld rivet (1) in a materially engaging manner so that a sandwich component comprising at least three metal sheets which are located at least partially one on the other is produced.

5. Method according to any one of Claims 1 to 4, **characterised in that** the first component (14) and/or the second component (15) is/are at least partially coated and subsequently both components are coupled to each other by means of the weld rivet (1).

6. Method according to any one of Claims 1 to 5, **characterised in that** the weld rivet (1) is punched and riveted into the first component (14) during the shaping operation, preferably in one operating step, without pre-punching.

7. Method according to any one of Claims 1 to 6, **characterised in that** the weld rivet (1) is supplied to the shaping tool in an automated manner.

8. Method according to any one of Claims 1 to 7, **characterised in that** the weld rivet (1) is introduced in the first component (14) with a lower side (2) facing the second component (15), wherein the lower side (2) has a curvature (10) and subsequently the lower side (2) is welded to a surface of the second component (15).

9. Method according to any one of Claims 1 to 8, **characterised in that** the weld rivet (1) and the second component (15) are thermally joined to each other by means of resistance welding.

10. Method according to either Claim 5 or 9, **characterised in that**, as a result of the thermal joining, the curvature (10) is flattened so that the first component (14) and the second component (15) are in abutment in a gap-free manner at least in the region bordering the weld rivet (1).

11. Method according to any one of Claims 1 to 10, **characterised in that** the weld rivet (1) with a wall thickness between 0.5 mm and 10 mm, in particular 0.5 mm and 7 mm and quite particularly preferably between 0.5 mm and 5 mm of the first component (14) is introduced so as to terminate with the upper side (6) thereof in a substantially planar manner with respect to a component surface of the first component (14).

12. Method according to any one of Claims 1 to 11, **characterised in that** the weld rivet (1) before being introduced into the first component (14) has a height which is greater than the wall thickness of the first component (14), wherein after the thermal joining the weld rivet (1) terminates in a substantially planar manner with respect to the first component (14).

13. Method according to any one of Claims 1 to 12, **characterised in that** the weld rivet (1) is introduced into the first component (14), riveted and welded to the second component (15) in one operating step.

14. Weld rivet connection having a first component (14), a second component (15) and a weld rivet (1), wherein the first component (14) and the second component (15) are formed from materials which are different from each other and the materials substantially cannot be thermally joined to each other and wherein a weld rivet (1) is introduced into the first component (14), wherein the weld rivet (1) is thermally coupled to the second component (15) and thus couples the first component (14) to the second component (15) in a positive-locking manner, the weld rivet (1) is constructed as a circular flat disc and has an upper collar (11) and a lower collar (12), wherein the upper collar (11) is constructed so as to protrude in relation to the lower collar (12), **characterised in that** an adhesive is at least partially arranged between the first component (14) and the second component (15), wherein the weld rivet (1) with a wall thickness between 0.5 mm and 10 mm of the first component (14) is introduced with the upper side (6) thereof so as to terminate in a substantially planar manner with respect to a component surface of the first component (14).

15. Weld rivet connection according to Claim 14, **characterised in that** a recess-like valley region (9) extends in cross-section from the upper collar (11) to the lower collar (12).

16. Weld rivet connection according to either Claim 14 or 15, **characterised in that** the weld rivet (1) has an upper side (6) and a lower side (2), wherein the upper collar (11) is constructed as a laterally extending extension of the upper side (6) and the lower collar (12) is constructed as a laterally extending extension of the lower side (2).

17. Weld rivet connection according to any one of Claims 14 to 16, **characterised in that** the weld rivet (1) has at the lower side (2) a curvature (10) which is at least partially flattened by the thermal joining operation and/or the curvature (10) is pressed into a joining face of the second component (15).

18. Weld rivet connection according to any one of Claims 14 to 17, **characterised in that** the weld rivet (1) has an upper diameter (5) in the region of the upper collar (11) between 5 and 20 mm, preferably between 10 and 14 mm and in particular between 11 and 13 mm.

19. Weld rivet connection according to any one of Claims 14 to 18, **characterised in that** the weld rivet (1) has a lower diameter (3) between 4 and 18 mm, preferably between 6 and 14 mm and in particular between 10 and 11 mm.

20. Weld rivet connection according to any one of Claims 14 to 19, **characterised in that** a peripheral chamfer (4) extends from the upper collar (11) towards the valley region (9), wherein the chamfer (4) extends in particular at an angle (α) between 40 and 60 degrees, preferably between 44 and 52 degrees relative to the upper side (6).

21. Weld rivet connection according to any one of Claims 14 to 20, **characterised in that** the weld rivet (1) has a thickness between 1 and 5 mm, in particular between 2 and 4 mm and in a particularly preferred manner between 2.5 and 3.5 mm.

22. Weld rivet connection according to any one of Claims 14 to 21, **characterised in that** the upper collar (11) and/or the lower collar (12) has at a side thereof a peripheral edge (7, 8), wherein the peripheral edge (7, 8) is constructed so as to preferably extend substantially orthogonally with respect to the upper side (6) and/or lower side (2).

23. Weld rivet connection according to any one of Claims 14 to 22, **characterised in that** the weld rivet (1) has at the lower side (2) thereof a punched collar which facilitates the introduction operation into the first component (14).

## Revendications

1. Procédé de fabrication d'une pièce hybride (13), selon lequel on couple une première pièce (14) à une deuxième pièce (15), la première pièce (14) et la deuxième pièce (15) étant conçues à partir de deux matériaux différents l'un de l'autre et les matériaux ne pouvant pas globalement être assemblés par voie thermique, un rivet à souder (1) étant prévu dans la première pièce (14) et le rivet à souder (1) étant assemblé par voie thermique à la deuxième pièce (15), le rivet à souder (1) étant placé dans la première pièce (14) et riveté dans la première pièce (14) puis la première pièce (14) étant mise en contact avec la deuxième pièce (15) et le rivet à souder (1) étant assemblé par voie thermique à la deuxième pièce (15), **caractérisé en ce que** l'on colle au moins par endroits la première pièce (14) à la deuxième pièce (15) et **en ce que** l'on enfonce et rivette le rivet à souder (1) avec sa surface (6) globalement plane et alignée avec la surface de la première pièce (14), la première pièce (14) ayant une épaisseur comprise entre 0,5 mm et 10 mm.

2. Procédé selon la revendication 1, **caractérisé en ce que** l'on place et rivette le rivet à souder (1) dans la première pièce (14) pendant une opération de formage de la première pièce (14), le formage de la première pièce (14) et la mise en place ainsi que le rivetage du rivet à souder (1) dans la première pièce (14) étant effectués conjointement dans un outil de formage.

3. Procédé selon la revendication 1 ou 2, **caractérisé en ce que** l'on couple par concordance de forme la première pièce (14) avec une troisième pièce (16) par l'intermédiaire du rivet à souder (1) et on assemble ensuite par liaison de matière le rivet à souder (1) avec la deuxième pièce (15).

4. Procédé selon l'une des revendications 1 à 3, **caractérisé en ce que**, sur un côté de la première pièce (14), on couple par liaison de matière une deuxième pièce (15) avec le rivet à souder et, sur le côté opposé (S), on couple par liaison de matière une troisième pièce (16) avec le rivet à souder (1) de telle sorte qu'une pièce en sandwich est fabriquée à partir d'au moins trois tôles superposées au moins par endroits.

5. Procédé selon l'une des revendications 1 à 4, **caractérisé en ce que** l'on revêt au moins par endroits la première pièce (14) et/ou la deuxième pièce (15) et on couple ensuite les deux pièces ensemble par l'intermédiaire du rivet à souder (1).

6. Procédé selon l'une des revendications 1 à 5, **caractérisé en ce que** l'on enfonce et on rivette le rivet à souder (1) dans la première pièce (14) pendant l'opération de formage, de préférence en une seule étape de travail, sans pré-percer.

7. Procédé selon l'une des revendications 1 à 6, **caractérisé en ce que** l'on apporte le rivet à souder (1) à l'outil de formage de manière automatisée.

8. Procédé selon l'une des revendications 1 à 7, **caractérisé en ce que** l'on met en place le rivet à souder (1) dans la première pièce (14) avec une face inférieure (2) dirigée vers la deuxième pièce (15), la face inférieure (2) comportant un bombement (10) et la face inférieure (2) étant ensuite soudée à une surface de la deuxième pièce (15).

9. Procédé selon l'une des revendications 1 à 8, **caractérisé en ce que** l'on assemble par voie thermique le rivet à souder (1) et la deuxième pièce (15) par soudage par résistance.

10. Procédé selon l'une des revendications 5 ou 9, **caractérisé en ce que** l'on aplanit le bombement (10) par l'assemblage thermique de telle sorte que la première pièce (14) et la deuxième pièce (15) reposent l'une contre l'autre sans espace au moins dans la zone entourant le rivet à souder (1).

11. Procédé selon l'une des revendications 1 à 10, **caractérisé en ce que**, pour une première pièce (14) d'une épaisseur entre 0,5 mm et 10 mm, notamment entre 0,5 mm et 7 mm et de préférence entre 0,5 mm et 5 mm, on place le rivet à souder (1) avec sa face supérieure (6) globalement plane et alignée avec une surface de la première pièce (14).

12. Procédé selon l'une des revendications 1 à 11, **caractérisé en ce que**, avant la mise en place dans la première pièce (14), le rivet à souder (1) a une hauteur qui est plus grande que l'épaisseur de la première pièce (14), le rivet à souder (1) après assemblage thermique se terminant globalement plan et aligné avec la première pièce (14).

13. Procédé selon l'une des revendications 1 à 12, **caractérisé en ce que**, en une seule étape de travail, on place le rivet à souder (1) dans la première pièce (14), on le rivette et on le soude avec la deuxième pièce (15).

14. Assemblage par rivet à souder comportant une première pièce (14), une deuxième pièce (15) et un rivet à souder (1), la première pièce (14) et la deuxième pièce (15) étant conçues à partir de deux matériaux différents l'un de l'autre et les matériaux ne pouvant globalement pas être assemblés par voie thermique, un rivet à souder (1) étant placé dans la première pièce (14), le rivet à souder (1) étant couplé par voie thermique à la deuxième pièce (15) et la première pièce (14) étant ainsi couplée par concordance de forme avec la deuxième pièce (15), le rivet à souder (1) est conçu comme un disque plat circulaire et comporte une collerette supérieure (11) et une collerette inférieure (12), la collerette supérieure (11) étant conçue de manière à déborder de la collerette inférieure (12), **caractérisé en ce qu'**un adhésif est agencé au moins par endroits entre la première pièce (14) et la deuxième pièce (15), le rivet à souder (1) pour une première pièce (14) d'une épaisseur entre 0,5 mm et 10 mm étant placé avec sa face supérieure (6) globalement plane et alignée avec une surface de la première pièce (14).

15. Assemblage par rivet à souder selon la revendication 14, **caractérisé en ce qu'**une zone en creux (9) à la manière d'une auge en section transversale s'étend entre la collerette supérieure (11) et la collerette inférieure (12).

16. Assemblage par rivet à souder selon l'une des revendications 14 ou 15, **caractérisé en ce que** le rivet à souder (1) comporte une face supérieure (6) et une face inférieure (2), la collerette supérieure (11) étant conçue comme un prolongement, qui en fait tout le tour latéralement, de la face supérieure (6) et la collerette inférieure (12) étant conçue comme un prolongement, qui en fait tout le tour latéralement, de la face inférieure (2).

17. Assemblage par rivet à souder selon l'une des revendications 14 à 16, **caractérisé en ce que** le rivet à souder (1) comporte sur la face inférieure (2) un bombement (10) qui est aplani au moins par endroits par le processus d'assemblage thermique et/ou le bombement (10) est enfoncé dans une surface d'assemblage de la deuxième pièce (15).

18. Assemblage par rivet à souder selon l'une des revendications 14 à 17, **caractérisé en ce que** le rivet à souder (1) a un diamètre supérieur (5) dans la zone de la collerette supérieure (11) compris entre 5 et 20 mm, de préférence entre 10 et 14 mm et notamment entre 11 et 13 mm.

19. Assemblage par rivet à souder selon l'une des revendications 14 à 18, **caractérisé en ce que** le rivet à souder (1) a un diamètre inférieur (3) compris entre 4 et 18 mm, de préférence entre 6 et 14 mm et notamment entre 10 et 11 mm.

20. Assemblage par rivet à souder selon l'une des revendications 14 à 19, **caractérisé en ce qu'**un biseau périphérique (4) s'étend de la collerette supérieure (11) à la zone en creux (9), le biseau (4) présentant notamment un angle (α) entre 40 et 60 degrés, de préférence entre 44 et 52 degrés, par rapport à la face supérieure (6).

21. Assemblage par rivet à souder selon l'une des revendications 14 à 20, **caractérisé en ce que** le rivet à souder (1) a une épaisseur comprise entre 1 et 5 mm, notamment entre 2 et 4 mm et de préférence entre 2,5 et 3,5 mm.

22. Assemblage par rivet à souder selon l'une des revendications 14 à 21, **caractérisé en ce que** la collerette supérieure (11) et/ou la collerette inférieure (12) a sur son côté une arête périphérique (7, 8), l'arête périphérique (7, 8) étant conçue de préférence de manière à s'étendre globalement perpendiculairement à la face supérieure (6) et/ou à la face inférieure (2).

23. Assemblage par rivet à souder selon l'une des revendications 14 à 22, **caractérisé en ce que** le rivet à souder (1) comporte sur sa face inférieure (2) une collerette estampée qui facilite l'opération de mise en place dans la première pièce (14).
